## Europäisches Patentamt
## European Patent Office
## Office européen des brevets

(19)

(11) Numéro de publication: **0 130 904**
**B1**

(12) **FASCICULE DE BREVET EUROPÉEN**

(45) Date de publication du fascicule du brevet:
08.06.88

(51) Int. Cl.⁴: **F 16 H  37/02**

(21) Numéro de dépôt: **84401349.0**

(22) Date de dépôt: **26.06.84**

(54) Transmission à variateur.

(30) Priorité: 30.06.83  FR 8310839

(43) Date de publication de la demande:
09.01.85 Bulletin 85/2

(45) Mention de la délivrance du brevet:
08.06.88 Bulletin 88/23

(84) Etats contractants désignés:
DE GB IT NL SE

(56) Documents cité:
EP-A-0 004 412
FR-A-2 303 206
FR-A-2 420 062
US-A-3 442 346

(73) Titulaire: **REGIE NATIONALE DES USINES RENAULT, Boîte postale 103 8-10 avenue Emile Zola, F-92109 Boulogne- Billancourt (FR)**

(72) Inventeur: **Mathiolon, Henri, 7, avenue de la Tranquillité, F-78000 Versailles (FR)**

(74) Mandataire: **Chassagnon, Jean- Alain, REGIE NATIONALE DES USINES RENAULT (S.0804), F-92109 Boulogne- Billancourt Cedex (FR)**

LIBER, STOCKHOLM 1988

EP 0 130 904 B1

## Description

La présente invention est relative à une transmission pour véhicule automobile et se rapporte plus particulièrement à une transmission à variation continue du rapport de transmission.

On connaît déjà des transmissions sur ce principe et on connaît également des améliorations visant à augmenter soit le rendement, soit la variation totale du rapport de transmission pour diminuer la consommation d'énergie. Par ailleurs, on a vu des dispositifs permettant d'accroître la longévité du variateur en le mettant hors circuit pendant certaines phases du fonctionnement, et notamment sur route comme par exemple celui du document FR-A-2420 062. Généralement ces dispositifs sont compliqués et coûteux en énergie et en prix de fabrication. De plus, l'augmentation de la plage de variation totale du rapport de transmission, nécessaire pour améliorer l'adaptation du groupe motopropulseur, altère le rendement du variateur lorsqu'il réalise la totalité de la plage de variation.

Le document DE-A-2758 905 décrit déjà les caractéristiques du préambule de la revendication 1.

Le but de la présente invention est de réaliser une transmission optimisant le rendement et la longévité du variateur en réduisant sa plage de variation, mais en l'utilisant deux fois pour ne pas diminuer la plage totale de variation de la transmission, à l'aide d'une boîte à deux rapports montée en amont du variateur. Le montage judicieux de la boîte à deux rapports permet en même temps d'obtenir deux liaisons directes à rapport de transmission constant, l'une étant utilisée à la fin de la première plage de variation du variateur, ce qui donne la possibilité de ramener le variateur à son rapport court, sans rupture de couple, et l'autre étant utilisée au rapport le plus long, c'est-à-dire à la fin de la seconde plage de variation du variateur.

A cet effet, l'invention a pour objet comme indiqué la revendication 1 une transmission de puissance à rapport de transmission continûment variable avec deux rapports de vitesse d'entrée et à deux rapports de transmission constants, notamment pour véhicule automobile économe en énergie, comportant un dispositif d'embrayage d'entrée, deux couples de pignons disposés entre l'arbre d'entrée du mouvement et l'arbre primaire d'un variateur, ce dernier étant constitué de deux arbres primaire et secondaire, ces arbres portant des dispositifs de variation et de transmission de la puissance ; et par ailleurs d'une liaison directe à deux rapports constants permettant de court-circuiter le variateur, ladite liaison directe étant réaliser par un couple de pignons disposés entre l'arbre d'entrée du mouvement et l'arbre secondaire du variateur, arbre portant également le pignon d'attaque. Des dispositifs de crabotage permettent d'obtenir successivement la transmission par le variateur à une vitesse réduite d'entrée sur le primaire du variateur, ensuite la transmission a un rapport constant égal à celui qui est obtenu dans le cas précédent lorsque le variateur est à son rapport long ; puis une transmission par le variateur avec une vitesse surmultipliée d'entrée sur le primaire du variateur et enfin une transmission à rapport constant égal à celui qui vient d'être obtenu lorsque le variateur est à son rapport le plus long.

Selon un mode de réalisation de l'invention, le dispositif de crabotage est constitué de deux crabots sur l'arbre d'entrée coaxial à l'arbre du moteur.

Selon un autre mode de réalisation de l'invention, les deux crabots disposés sur l'arbre d'entrée du mouvement sont remplacés par un crabot double.

Selon un mode de réalisation de l'invention, la première liaison directe a un rapport égal au rapport de la première vitesse d'entrée du mouvement dans le variateur, multiplié par le rapport long du variateur.

Selon un mode de réalisation de l'invention, le rapport de la première liaison directe est aussi égal au rapport de la deuxième vitesse d'entrée du mouvement dans le variateur multiplié par le rapport court du variateur.

Selon un autre mode de réalisation de l'invention, la deuxième liaison directe a un rapport égal au rapport de la deuxième vitesse d'entrée du variateur multiplié par un rapport long du variateur.

Selon un mode de réalisation de l'invention, la marche arrière est obtenue en utilisant la première partie de la première liaison directe, puis en interposant un pignon intermédiaire porté par un arbre intermédiaire situé entre l'arbre d'entrée coaxial à l'arbre du moteur et l'arbre de sortie portant le pignon d'attaque.

Les réalisations qui sont représentées en annexe ne sont données qu'à titre d'exemple et servent de base pour la description et l'explication du fonctionnement de la présente invention.

Les dessins annexés sont les suivants:
-la figure 1 représente la chaîne cinématique d'ensemble d'une transmission selon l'invention dans laquelle le dispositif de crabotage comprend deux demi-crabots ;
-la figure 2 représente la chaîne cinématique d'ensemble d'une transmission selon l'invention dans laquelle le dispositif de crabotage comprend un crabot double ;
-la figure 3 représente la chaîne cinématique de la transmission selon l'invention, avec le premier rapport de gamme et le variateur ;
- la figure 4 représente la chaîne cinématique de la transmission selon l'invention, avec la première liaison directe ;
-la figure 5 représente la chaîne cinématique de la transmission selon l'invention, avec le deuxième rapport de gamme et le variateur ;
-la figure 6 représente la chaîne cinématique de la transmission selon l'invention, avec la deuxième liaison directe ;
- la figure 7 représente la chaîne cinématique de la transmission selon l'invention, avec la marche arrière.

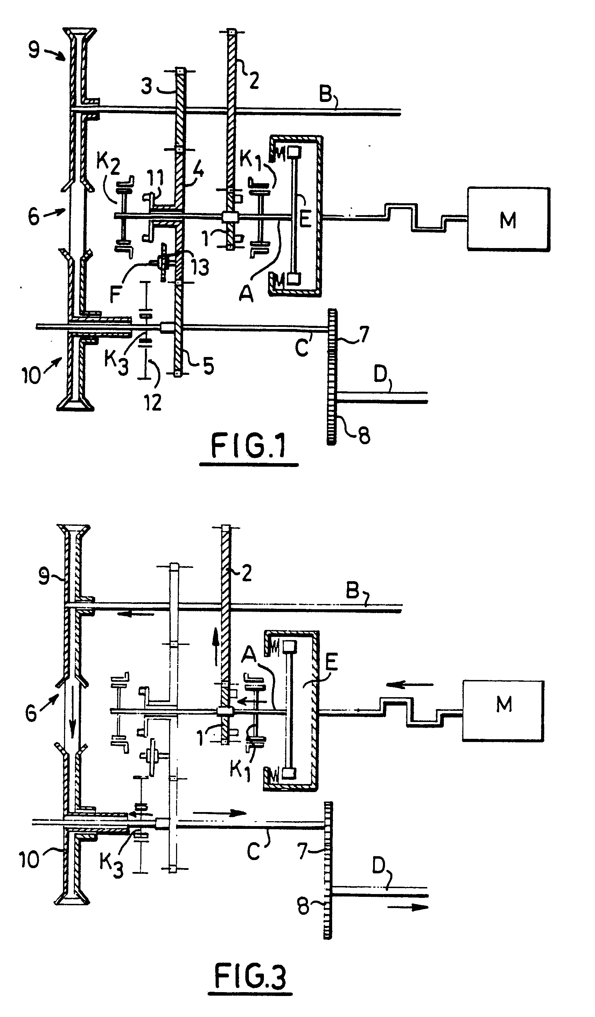

Un mode de réalisation d'une transmission de puissance selon l'invention est représenté sur la figure 1. Un moteur M entraîne un embrayage dont le plateau d'embrayage E peut rendre solidaire du moteur l'arbre d'entrée A du mouvement dans la transmission. L'arbre A porte deux demi-crabots $K_1$ et $K_2$ permettant de rendre solidaire de l'arbre A pignons primaires 1 et 4, respectivement le pignon 1 pour $K_1$ et le pignon 4 pour $K_2$. Le pignon 1 engrène avec un pignon 2 et le pignon 4 engrène avec un pignon 3 ; les pignons 2 et 3 étant solidaires d'un arbre B qui est également l'arbre primaire d'un variateur 6 et porte solidairement les poulies 9 du variateur 6. Des poulies secondaires 10 du variateur 6 sont montées sur un arbre secondaire (arbre de sortie) C. Cet arbre secondaire C porte également un pignon d'attaque 7, celui-ci engrènant avec une couronne 8 sur un arbre D du pont. L'arbre C porte également un crabot (dispositif de crabotage double) $K_3$ qui peut rendre solidaire de l'arbre C soit les poulies 10 du variateur 6 soit le pignon 5 qui engrène en permanence avec le pignon 4 porté par l'arbre A. Le pignon 4 de l'arbre A porte solidairement sur le côté un pignon 11 destiné à une marche arrière pour engrener avec un pignon baladeur 13 d'un arbre intermédiaire F. Ce pignon 13 peut engrener avec un pignon 12 porté par le crabot $K_3$ de l'arbre C. Sur cette figure 1, tous les crabots $K_1$, $K_2$, $K_3$ sont représentés au neutre et l'embrayage est débrayé.

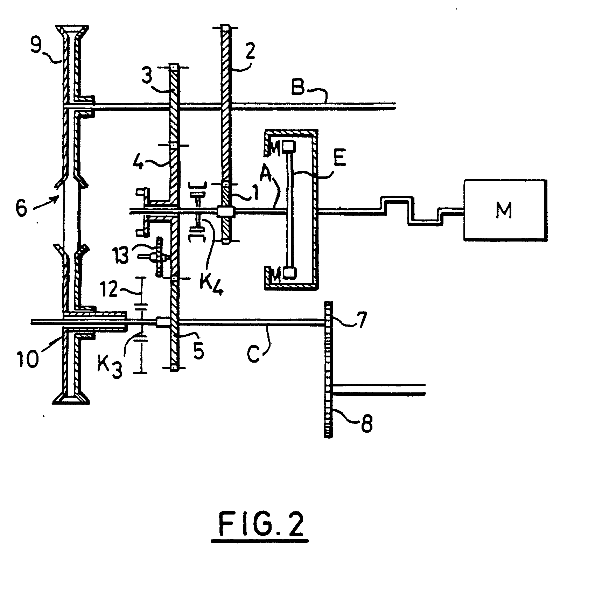

La figure 2 représente un dispositif de transmission de puissance selon l'invention dérivée de la figure 1 et dans laquelle un crabot $K_4$ permet de solidariser avec l'arbre d'entrée A soit le pignon 1 soit le pignon 4. La marche arrière est réalisée comme sur la figure 1.

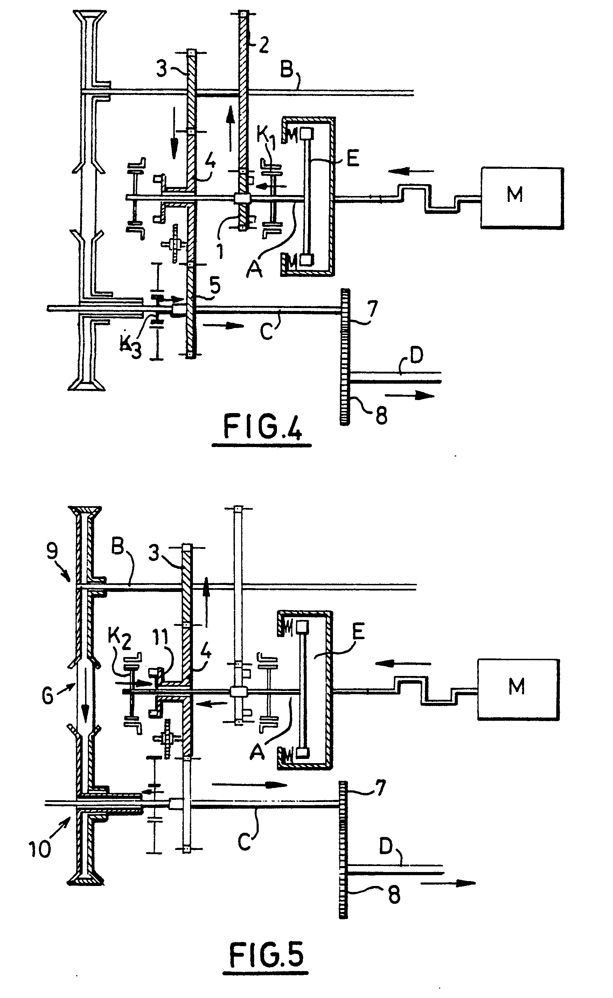

La figure 3 représente la circulation de puissance dans la transmission selon l'invention avec le premier rapport de gamme et le variateur. Un rapport $\rho_1$ donné par la première vitesse d'entrée, le crabot $K_1$ ($K_4$ de la figure 2) étant engagé avec le pignon 1 (à noter que $\rho_1 = \frac{n_1}{n_2}$, $n_1$ et $n_2$ étant respectivement les nombres de dents des pignons 1 et 2) et le crabot $K_3$ étant engagé avec les poulies 10 du variateur 6.

La flèche représentée sur la figure 3 symbolise la circulation de puissance du moteur M vers le pont.

Si $\mu_1$ et $\mu_2$ sont les rapports extrêmes de variation du rapport de vitesse du variateur, le rapport de la transmission pourra varier entre $\rho_1 \mu_1$ et $\rho_1 \mu_2$.

La figure 4 représente la circulation de la puissance dans la transmission selon l'invention avec la première liaison directe.

Sur cette figure la transmission se fait à un rapport fixe, égal à celui obtenu lorsque le variateur est à son rapport long et entraîné en première vitesse, c'est-à-dire au rapport $\rho_1 \mu_2$. Le crabot $K_1$ ($K_4$ sur la figure 2) est toujours engagé sur le pignon 1, et le crabot $K_3$ est maintenant engagé avec le pignon 5.

A noter que le rapport de transmission est le suivant:

$$R = \frac{n_1}{p_2} \times \rho_3 \quad \rho_1 = \frac{n_1}{n_2} \quad \rho_2 = \frac{n_4}{n_3} \quad \rho_3 = \frac{n_4}{n_5}$$

$n_1$, $n_2$, $n_3$, $n_4$, $n_5$ étant les nombres de dents respectivement des pignons 1, 2, 3, 4 et 5.

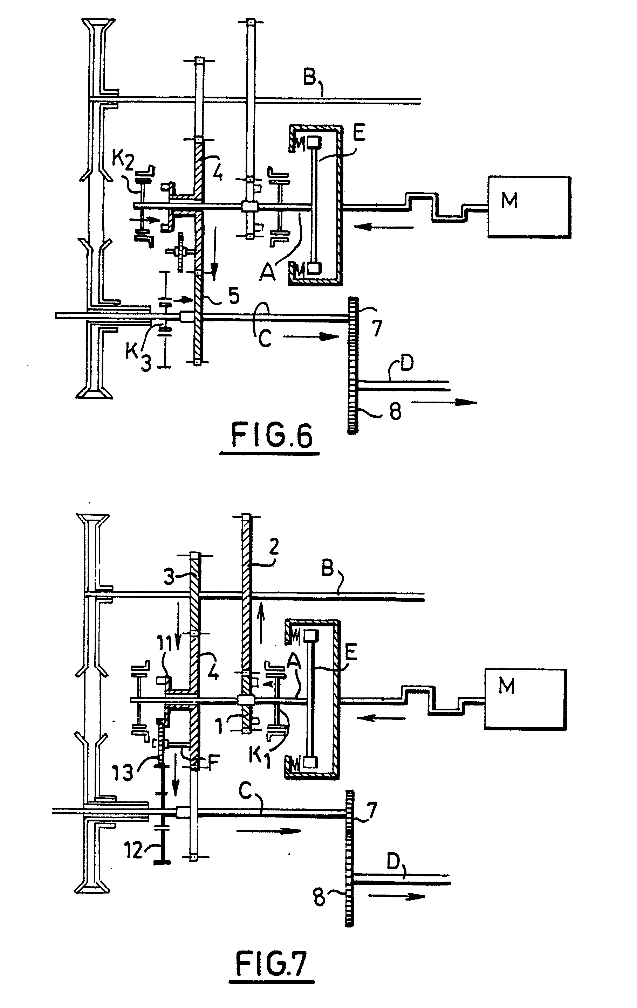

La figure 5 représente la circulation de la puissance dans la transmission suivant l'invention avec le deuxième rapport de gamme et le variateur. Dans cette figure la transmission se fait par le variateur entraîné sur le deuxième rapport de vitesse d'entrée (rapport $\rho_2 = \frac{n_4}{n_3}$). Le crabot $K_2$ (ou $K_4$ sur la figure 2) est engagé avec le pignon 4, et le crabot $K_3$ est engagé avec les poulies 10 du variateur 6.

Le rapport de transmission peut varier de $\rho_2 \mu_1$ à $\rho_2 \mu_2$.

La figure 6 représente la circulation de la puissance dans une transmission selon l'invention avec la deuxième liaison directe. Dans cette figure la transmission de puissance se fait suivant un rapport constant, c'est donc une liaison directe, par les pignons 4 et 5. Le crabot $K_2$ (ou $K_4$ sur la figure 2) est engagé avec le pignon 4 et le crabot $K_3$ est engagé avec le pignon 5.

Le rapport de transmission est $\rho_3$.

La figure 7 représente la circulation de la puissance dans une transmission selon l'invention avec la marche arrière.

Cette figure représente la marche arrière où la puissance circule par les pignons 1-2, 3-4, 11-13-12. Le crabot $K_1$, (ou $K_4$ sur la figure 2) est engagé avec le pignon 1. Le pignon 13 est déplacé pour être en prise avec les pignons 11 et 12. Les crabots $K_2$ et $K_3$ sont au neutre.

Le rapport de réduction en marche arrière est : $R_{ar} = \frac{n_1}{n_2} \rho_4$ avec $\rho_4 = \frac{n_{11}}{n_{12}}$, $n_{11}$ et $n_{12}$ étant le nombre de dents respectivement des pignons 11 et 12.

La transmission ainsi décrite comporte en plus un dispositif électronique avec capteur de vitesse du pignon 5, des poulies 10 du variateur 6 et du pignon 7. Ce dispositif électronique comporte aussi des actionneurs des crabots $K_1$ et $K_2$ (ou $K_4$ sur la figure 2) et $K_3$. L'embrayage E peut être commandé manuellement ou automatiquement.

L'ensemble électronique, non décrit par les dessins et connu en soi, gère automatiquement la transmission et le moteur thermique de manière à utiliser ce dernier moteur thermique en permanence dans sa zone de consommation économique, en pilotant le carburateur ou la pompe à injection du moteur et le rapport de transmission par l'intermédiaire de la commande du variateur des commandes diverses des crabots et éventuellement de la commande de l'embrayage.

Ce système électronique, qui reçoit en outre les informations de vitesses données par les capteurs précédemment cités, est capable de commander le passage, ou synchronisme de rotation, d'un mode à l'autre à savoir par le variateur ou par liaison directe.

Lorsque l'on veut démarrer le véhicule en marche avant, les informations données par le conducteur marche avant et position α 1 de la pédale d'accélérateur, le système se place dans la position repérée sur la figure 3. Si l'embrayage est à commande automatique, le système électronique commande la fermeture progressive de l'embrayage puis le système gère l'ensemble du groupe moteur-transmission comme indiqué auparavant.

Si les conditions sont telles que le variateur arrive à son rapport le plus long, et que le système demande un rapport encore plus long, le microprocesseur va chercher à passer dans une position telle que celle représentée par la figure 4, pour ensuite passer à une configuration telle que celle de la figure 5. Arrêtons-nous un instant sur ces deux changements de mode.

Tout d'abord, en reprenant le schéma de la figure 3, on constate que le rapport long obtenu est : $\rho_1 \mu_2$ et que l'on veut passer au schéma de la figure 4 où le rapport constant est égal à : $\frac{\rho_1}{\rho_2} \times \rho_3$. Pour que le passage d'un schéma à l'autre se fasse sans problème, uniquement par action sur le crabot $K_3$, il faut que cela se fasse au synchronisme de rotation des poulies 10 et du pignon 5, donc que $\rho_1 \mu_2 = \frac{\rho_1}{\rho_2} \times \rho_3$. Il suffit donc de choisir des rapports $\rho_1$, $\rho_2$, $\rho_3$ et des ouvertures $\mu_1$ et $\mu_2$ du variateur tels que :

$$\mu_2 = \frac{\rho_3}{\rho_2}$$

Pendant que la transmission est à son rapport fixe, suivant le schéma de la figure 4, l'automatisme électronique ramène le variateur à son rapport de variation court $\mu_1$. IL ne reste plus qu'à passer au schéma de la figure 5 pour reprendre la variation continue de rapport de vitesses à l'aide du variateur 6.

Pour passer du mode de la figure 4 à celui de la figure 5 les séquences sont les suivantes :
- commande du moteur thermique pour annuler le couple moteur tout en le maintenant à son régime de rotation et permettre le décrabotage du pignon 5 à l'aide du crabot $K_3$ que l'on met au neutre ;
- décrabotage du pignon 1 à l'aide du crabot $K_1$ et crabotage du pignon 4 à l'aide du crabot $K_2$ (ou du crabot $K_4$ du pignon 1 au pignon 4 sur la figure 2) ;

Dans cette position la vitesse des poulies 10 est la suivante par rapport à la vitesse du moteur thermique : $\rho_2 \mu_1$ pendant que la vitesse du crabot $K_3$ de l'arbre C est encore au rapport : $\frac{\rho_1}{\rho_2} \times \rho_3$ de la vitesse du moteur thermique.

Si la vitesse du moteur thermique a été maintenue par le système électronique à la vitesse d'avant le déclenchement du changement de mode, le crabot $K_3$ pourra être engagé sur les poulies 10, à condition qu'il soit au synchronisme avec les poulies 10 du variateur 6 ; c'est-à-dire à condition que:

$\rho_2 \mu_1 = \frac{\rho_1}{\rho_2} \times \rho_3$ soit $\mu_1 = \frac{\rho_1 \times \rho_3}{\rho_2 2}$
a ce moment l'automatisme électronique corrige les variations de vitesses de l'arbre C par action sur le moteur thermique et lorsque le synchronisme est obtenu le crabot $K_3$ est engagé sur les poulies 10. On se trouve ainsi dans la position représentée sur la figure 5, où le rapport de transmission peut varier continûment de $\rho_2 \mu_1$ à $\rho_2 \mu_2$.

Lorsque l'on veut passer de la seconde liaison directe représentée sur la figure 6, on pousse le variateur à son rapport long $\mu_2$ et comme nous avons vu que $\rho_2 \mu_2 = \rho_3$, il suffit de passer le crabot $K_3$ des poulies du variateur au pignon 5, car il y a synchronisme de rotation entre les éléments 10 et 5 et $K_3$.

Bien entendu, le passage dans l'autre sens, en allant donc vers les rapports courts, des divers modes, se fait de la même manière à quelques différences près.

Par exemple pour repasser du schéma de la figure 6 à celui de la figure 5, il n'est pas indispensable d'obtenir le synchronisme entre le pignon 5 et les poulies 10, par contre il faut l'obtenir entre les poulies 10 et le crabot $K_3$, donc de l'arbre C ; ce synchronisme peut être obtenu avec un rapport de variateur inférieur au rapport $\mu_2$ et avec une accélération du moteur thermique, permettant ainsi un rétrogradage avec augmentation de la puissance disponible au moteur thermique.

Pour le passage du mode de la figure 5 à celui de la figure 4, on attendra que le variateur soit à son rapport court $\mu_1$ pour commander :
- la coupure du couple moteur thermique, mais avec maintien de sa vitesse de rotation ;
- le décrabotage des poulies 10 en mettant $K_3$ au neutre ;
- la mise de $K_2$ au neutre (ou de $K_4$ dans le cas de la figure 2) ;
- le crabotage de $K_1$ avec le pignon 1 (ou de $K_4$ avec le pignon 1 dans le cas de la figure 2) ;
- puis le crabotage de $K_3$ avec le pignon 5 lorsque le synchronisme est atteint.

Pour le passage du mode de la figure 4 à celui du mode de la figure 3, on amènera, dans le fonctionnement en liaison directe, le variateur à son rapport long, puis lorsque le synchronisme entre les poulies 10 et le pignon 5 sera réalisé il restera à basculer le crabot $K_3$ du pignon 5 sur la poulie 10.

Pendant tous ces changements de mode, on annule le couple du moteur thermique pour les décrabotages et on maintient toujours sa vitesse à sa valeur initiale ; cependant cette vitesse peut être modulée par le microprocesseur de telle sorte que le synchronisme soit maintenu entre les pignons et les crabots que l'on veut engager.

Avec cette invention, on peut envisager pour ce type de transmission soit la même plage de variation du rapport de transmission pour le variateur à chacune des deux vitesses d'entrée (rapport $\rho_1$ ou $\rho_2$) soit des plages différentes. La plage pour le rapport d'entrée court $\rho_1$ étant plus large que celle pour le rapport d'entree $\rho_2$ ; on se rapproche ainsi de l'utilisation urbaine sur le premier rapport d'entrée et de l'utilisation routière pour le deuxième rapport d'entrée.

A titre d'exemple, en choisissant une ouverture globale de 6,75, on peut prendre soit deux plages identiques de $\sqrt{6,75} = 2,60$ (de 0,62 à 1,612), soit une plage de 4,5 pour le premier rapport d'entrée $\rho_1$ et une plage de 1,5 pour le second rapport d'entrée $\rho_2$.

Pour ce second cas, si nous limitons les rapports longs du variateur à 1,4 et si nous choisissons un rapport d'entrée $\rho_1$ de 0,7 nous avons :

$$\rho_2 = 1,05$$
$$\rho_3 = 1,47$$

Ce qui nous donnera des rapports allant de : 0,218 à 0,98 pour la première plage
et de 0,98 à 1,47 pour la deuxième plage.
Soit par exemple de : 8,5 km/h/1 000 tours moteur à 38,25 km/h/1000 tours moteur pour la première plage et 38,25 à 53,55 pour la deuxième plage.

Pour avoir une marche arrière légèrement plus courte que le rapport court en marche avant, on choisira par exemple

$$R_{ar} = 0,2 = \frac{\rho_1}{\rho_2} \times \rho_4 = \frac{0,7}{1,05} \times \rho_4$$

donc $\rho_4 = 0,3$ soit $\frac{n_{11}}{n_{12}} = 0,3$.

**Revendications**

1. Transmission de puissance comprenant un embrayage d'entrée, une boîte de gamme à deux rapports et un variateur (6), ladite transmission permettant un passage du mouvement, d'une part directement vers un arbre secondaire C (arbre de sortie) et d'autre part, par l'intermédiaire du variateur (6), caractérisé en ce que:
- la boîte de gamme à deux rapports est disposée à l'entrée du variateur (6), dont un pignon primaire (4) du deuxième rapport monté sur un arbre d'entrée (A) entraîne directement un pignon (5) monté sur l'arbre de sortie (C) imédiatement en amont d'un pignon d'attaque (7);
-un dispositif de crabotage double (K3) est monté sur l'arbre de sortie entre ledit pignon (5) et la poulie double réceptrice (10) du variateur (6);
- ledit dispositif de crabotage double permet d'une part, une liaison directe des deux rapports de la boîte de gamme vers l'arbre de sortie et, d'autre part, le passage du mouvement des deux rapports de la bôite de gamme par l'intermédiaire du variateur (6) vers l'arbre de sortie.

2. Transmission selon la revendication 1, caractérisée en ce que la boîte de gamme à deux rapports est constituée par deux trains d'engrenages avec des pignons (1, 2, 3, 4, 5) et (4, 5), dont les pignons primaires (1 et 4) étant montés libres sur l'arbre d'entrée (A), et pouvant être rendus respectivement solidaires en rotation de l'arbre (A) par un dispositif de crabotage (K1, K2; K4).

3. Transmission selon la revendication 2, caractérisée en ce que le dispositif de crabotage comprend deux crabots (K$_1$, K$_2$) commandant respectivement les pignons primaires (1, 4) (Fig. 1).

4. Transmission selon la revendication 2, caractérisée en ce que le dispositif de crabotage comprend un crabot double (K$_4$) commandant alternativement les pignons primaires (1, 4) (Fig. 2).

5. Transmission selon l'une des revendications précédentes, caractérisée en ce que lors de la première liaison directe, la puissance circule par l'intermédiaire des pignons 1, 2, 3, 4, 5 vers l'arbre de sortie, le pignon primaire (1) étant rendu solidaire de l'arbre d'entrée (A) par le crabot (K$_1$) ou le crabot double (K$_4$) et le pignon (5) étant rendu solidaire de l'arbre de sortie (C) par le crabot dudit dispositif de crabotage double (K3) (Fig. 4).

6. Transmission selon la revendication 5, caractérisé en ce que le rapport de vitesse $\frac{\rho_1}{\rho_2} \times \rho_3$ de la première liaison directe est égal au rapport de vitesse $\rho_1$ du premier rapport de gamme multiplié par un rapport long $\mu_2$ du variateur.

7. Transmission selon la revendication 5, caractérisée en ce que le rapport de vitesse $\frac{\rho_1}{\rho_2} \times \rho_3$ de la première liaison directe est égal au rapport de vitesse $\rho_2$ du deuxième rapport de gamme multiplié par un rapport court $\mu_1$ du variateur.

8. Transmission selon l'une des revendications 1 à 4, caractérisée en ce que lors de la deuxième liaison directe, la puissance circule par l'intermédiaire du pignon primaire (4) du deuxième rapporte rendu solidaire de l'arbre d'entrée (A) par le crabot (K$_2$) ou le crabot double (K$_4$) vers le pignon (5) étant rendu solidaire dudit arbre de sortie par le crabot dudit dispositif de crabotage double (K3) (Fig. 6).

9. Transmission selon la revendication 8, caractérisée en ce que le rapport de vitesse ($\rho_3$)de la deuxième liaison directe est égal au rapport de vitesse ($\rho_2$) du second rapport de gamme multiplié par le rapport long ($\mu_2$)du variateur.

10. Transmission selon la revendication 1, caractérisée en ce qu'une marche arrière est obtenue en faisant circuler la puissance par l'intermédiaire des pignons de boîte de gamme dont un pignon (11) est solidaire du pignon primaire (4), un autre pignon (12) est solidaire du crabot dudit dispositif de crabotage double (K$_3$) et un troisième (13) est monté coulissant sur un arbre intermédiaire (F) pour assurer l'inversion du sens de rotation (Fig. 7).

11. Transmission selon l'une des revendications 1 à 9, caractérisée par le fait que les rapports longs du variateur utilisés sur les deux rapports de gamme sont les mêmes.

12. Transmission selon l'une des revendications 1 à 9, caractérisée en ce que les rapports courts du variateur utilisés sur chaque rapport de gamme sont différents.

13. Transmission selon la revendication 12, caractérisée en ce que les plages de variation du rapport de vitesse du variateur sur chacun des deux rapports de gamme sont différentes.

14. Transmission selon la revendication 13, caractérisée en ce que la plage de variation du rapport de vitesse obtenue sur le premier rapport de gamme ($\rho_1$) est plus grande que la plage obtenue sur le deuxième rapport de gamme ($\rho_2$).

15. Transmission selon la revendication 1, caractérisée en ce que le rapport le plus long du variateur est inférieur au rapport de vitesse de la deuxième liaison directe.

16. Transmission selon la revendication 1, caractérisée en ce que les différents passages de vitesses par liaisons directes ou par le variateur sont réalisés de façon automatique.


**Patentansprüche**

1. Kraftübertragung mit einer Eingangskupplung, einer Ritzelanordnung mit zwei Schaltzuständen und einem stufenlosen Getriebe (6), wobei einerseits ein Kraftschluß direkt mit einer Sekundärwelle C (Ausgangswelle) und andererseits über das stufenlose Getriebe (6) ermöglicht wird, dadurch gekennzeichnet, daß
- die Ritzelanordnung mit zwei Schaltzuständen an der Antriebsseite des stufenlosen Getriebes (6) vorgesehen ist, wobei ein Primärritzel (4) des zweiten Schaltzustandes, das auf einer Eingangswelle A angeordnet ist, direkt ein Ritzel (5) antreibt, das auf der Ausgangswelle C unmittelbar vor dem Triebling (7) befestigt ist,
- eine Anordnung mit doppelten Schaltklauen (K3) auf der Ausgangswelle zwischen dem Ritzel (5) und der doppelten Abtriebsscheibe (10) des stufenlosen Getriebes (6) angeordnet ist,
- wobei die Anordnung mit doppelten Schaltkauen einerseits die direkte Verbindung der beiden Schaltzustände der Ritzelanordnung mit der Ausgangswelle ermöglicht und andererseits den Kraftschluß in beiden Schaltzuständen der Ritzelanordnung über das stufenlose Getriebe (6) mit der Ausgangswelle C ermöglicht.

2. Kraftübertragung nach Anspruch 1, dadurch gekennzeichnet, daß die Ritzelanordnung mit zwei Schaltzuständen aus zwei Umlaufgetrieben mit den Ritzeln (1, 2, 3, 4, 5) und (4, 5) besteht, wobei die Primärritzel (1 und 4) frei auf der Eingangswelle A angeordnet sind und jeweils drehfest mit der Welle A über die Schaltkauenanordnung (K1, K2, K4) verbunden werden können.

3. Kraftübertragung nach Anspruch 2, dadurch gekennzeichnet, daß die Schaltklauenanordnung zwei Schaltklauen (K1, K2) aufweist, die die entsprechenden Primärritzel (1 und 4) steuern (Figur 1).

4. Kraftübertragung nach Anspruch 2, dadurch gekennzeichnet, daß die Schaltklauenanordnung eine doppelte Schaltklaue (K4) aufweist, die abwechselnd die Primärritzel (1 und 4) steuert (Figur 2).

5. Kraftübertragung nach einem der vorhergehenden Ansprüche, dadurch gekennzeichnet, daß während der ersten Direktverbindung der Kraftfluß sich über die Ritzel (1, 2, 3, 4, 5) zur Ausgangswelle erstreckt, wobei das Primärritzel (1) drehfest mit der Eingangswelle A über die Schaltklaue (K1) oder die doppelte Klaue (K4) verbunden ist und das Ritzel (5) drehfest mit der Ausgangswelle C über die Schaltklaue der Anordnung mit doppelten Schaltklauen (K3) verbunden ist (Figur 4).

6. Kraftübertragung nach Anspruch 5, dadurch gekennzeichnet, daß das Verhältnis der Geschwindigkeit $\frac{\rho_1}{\rho_2} \times \rho_3$ der ersten Direktverbindung gleich dem Verhältnis der Geschwindigkeit $\rho_1$ des ersten Schaltzustandes ist, multipliziert mit einem Längenverhältnis $\mu_2$ des stufenlosen Getriebes.

7. Kraftübertragung nach Anspruch 5, dadurch gekennzeichnet, daß das Verhältnis der Geschwindigkeit $\frac{\rho_1}{\rho_2} \times \rho_3$ der ersten Direktverbindung gleich demjenigen der Geschwindigkeit $\rho_2$ des zweiten Schaltzustandes ist, multipliziert mit einem kleinen Verhältnis $\mu_1$ des stufenlosen Getriebes.

8. Kraftübertragung nach einem der vorhergehenden Ansprüche, dadurch gekennzeichnet, daß während der zweiten Direktverbindung der Kraftfluß mittels des Primärritzels (4) des zweiten Schaltzustandes, das drehfest mit der Eingangswelle A mittels der Schaltklaue (K2) oder der doppelten Schaltklaue (K4) verbunden ist zum Ritzel (5) erfolgt, das drehfest mit der Ausgangswelle C über die Schaltklauen der Anordnung mit doppelten Schaltklauen (K3) verbunden ist (Figur 6).

9. Kraftübertragung nach Anspruch 8, dadurch gekennzeichnet, daß das Verhältnis der Geschwindigkeit $\rho_3$ der zweiten Direktverbindung gleich dem Verhältnis der Geschwindigkeit $\rho_2$ des zweiten Schaltzustandes ist, multipliziert mit dem großen Verhältnis $\mu_2$ des stufenlosen Getriebes.

10. Kraftübertragung nach Anspruch 1, dadurch gekennzeichnet, daß eine Rückwärtsgang erhalten wird, indem der Kraftfluß mittels der Ritzel der Ritzelanordnung erhalten wird, deren Ritzel (11) mit dem Primärritzel (4) verbunden wird, ein anderes Ritzel (12) mit der Schaltklaue der Anordnung mit doppelten Schaltklauen (K3) verbunden wird und ein drittes Ritzel (13) gleitend auf einer Zwischenwelle F angeordnet ist, um die Umkehrung der Drehrichtung zu gewährleisten (Figur 7).

11. Kraftübertragung nach einem der Ansprüche 1 bis 9, dadurch gekennzeichnet, daß die großen Verhältnisse des verwendeten stufenlosen Getriebes in den beiden

Schaltzuständen die gleichen sind.

12. Kraftübertragung nach einem der Ansprüche 1 bis 9, dadurch gekennzeichnet, daß die kleinen Verhältnisse des verwendeten stufenlosen Getriebes in jedem Schaltzustand unterschiedlich sind.

13. Kraftübertragung nach Anspruch 12, dadurch gekennzeichnet, daß die Variationsbereiche der Geschwindigkeitsverhältnisse des stufenlosen Getriebes in den beiden Schaltzuständen unterschiedlich sind.

14. Kraftübertragung nach Anspruch 13, dadurch gekennzeichnet, daß der Variationsbereich des erhaltenen Geschwindigkeitsverhältnisses im ersten Schaltzustand $\rho_1$ größer ist als der im zweiten Schaltzustand $\rho_2$ erhaltene Bereich.

15. Kraftübertragung nach Anspruch 1, dadurch gekennzeichnet, daß das größte Verhältnis des stufenlosen Getriebes kleiner ist als das Geschwindigkeitsverhältnis der zweiten Direktverbindung.

16. Kraftübertragung nach Anspruch 1, dadurch gekennzeichnet, daß die einzelnen Kraftschlüsse mittels Direktverbindung oder mittels stufenlosem Getriebe automatisch verwirktlicht werden.


**Claims**

1. A power transmission comprising an input clutch, a range box having two ratios and a variator (6), said transmission permitting a transmission of the movement on the one hand directly to a secondary shaft C (output shaft) and on the other hand by way of the variator (6) characterised in that:
- the two-ratio range box is disposed at the input of the variator (6) in which a primary pinion (4) of the second ratio, mounted on an input shaft (A), directly drives a pinion (5) mounted on the output shaft (C) directly upstream of a drive pinion (7);
- a double dog clutch arrangement (K3) is mounted on the output shaft between said pinion (5) and the double receiving pulley (10) of the variator (6);
- said double dog clutch arrangement permits on the one hand a direct connection in respect of the two ratios of the range box to the output shaft and on the other hand transmission of the movement of the two ratios of the range box by way of the variator (6) to the output shaft.

2. A transmission according to claim 1 characterised in that the two-ratio range box is formed by two trains of gears with pinions (1, 2, 3, 4, 5) and (4, 5) in which the primary pinions (1 and 4) are mounted free on the input shaft (A) and can be respectively fixed in respect of rotation with the shaft (A) by a dog clutch arrangement (K1, K2; K4).

3. A transmission according to claim 2 characterised in that the dog clutch arrangement comprises two dog clutches (K1, K2) respectively controlling the primary pinions (1, 4) (Figure 1).

4. A transmission according to claim 2 characterised in that the dog clutch arrangement comprises a double dog clutch (K4) for alternately controlling the primary pinions (1, 4) (Figure 2).

5. A transmission according to one of the preceding claims characterised in that, in the first direct connection mode, the power flows by way of the pinions (1, 2, 3, 4, 5) towards the output shaft, the primary pinion (1) being fixed with respect to the input shaft (A) by the dog clutch (K1) or the double dog clutch (K4) and the pinion (5) being fixed with respect to the output shaft (6) by the dog clutch of said double dog clutch arrangement (K3) (Figure 4).

6. A transmission according to claim 5 characterised in that the speed ratio $\frac{\rho_1}{\rho_2} \times \rho_3$ of the first direct connection is equal to the speed ratio $\rho_1$ of the first range ratio multiplied by a long ratio $\mu_m$ of the variator.

7. A transmission according to claim 5 characterised in that the speed ratio $\frac{\rho_1}{\rho_2} \times \rho_3$ of the first direct connection is equal to the speed ratio $\rho_2$ of the second range ratio multiplied by a short ratio $\mu_1$ of the variator.

8. A transmission according to one of claims 1 to 4 characterised in that in the second direct connection mode the power flows by way of the primary pinion (4) of the second ratio which is fixed with respect to the input shaft (A) by the dog clutch (K2) or the double dog clutch (K4) towards the pinion (5) and is fixed with respect to said output shaft by the dog clutch of said double dog clutch arrangement (K3) (Figure 6).

9. A transmission according to claim 8 characterised in that the speed ratio ($\rho_3$) of the second direct connection is equal to the speed ratio ($\rho_2$) of the second range ratio multiplied by the long ratio ($\mu_2$) of the variator.

10. A transmission according to claim 1 characterised in that reverse movement is produced by causing the power to flow by way of the range box pinions in which one pinion (11) is fixed with respect to the primary pinion (4), another pinion (12) is fixed with respect to the dog clutch of said double dog clutch arrangement (K3) and a third pinion (13) is mounted slidably on an intermediate shaft (F) to provide for reversal of the direction of rotation (Figure 7).

11. A transmission according to one of claims 1 to 9 characterised in that the long ratios of the variator which are used on the two range ratios are the same.

12. A transmission according to one of claims 1 to 9 characterised in that the short ratios of the variator which are used on each range ratio are different.

13. A transmission according to claim 12 characterised in that the ranges of variation in the ratio of speeds of the variator in each of the two range ratios are different.

14. A transmission according to claim 13 characterised in that the range of variation in the speed ratio obtained on the first range ratio ($\rho_1$) is greater than the range obtained on the second range ratio ($\rho_2$).

15. A transmission according to claim 1 characterised in that the longest ratio of the variator is lower than the speed ratio of the second direct connection.

16. A transmission according to claim 1 characterised in that the different transmissions of speeds by direct connections or by way of the variator are produced automatically.

**0 130 904**

FIG.1

FIG.3

# FIG.2

FIG.4

FIG.5

FIG.6

FIG.7